# EUROPÄISCHE PATENTSCHRIFT

(11) **EP 2 832 497 B1**
(45) Veröffentlichungstag und Bekanntmachung des Hinweises auf die Patenterteilung: **14.06.2017**
(21) Anmeldenummer: 14002607.1
(22) Anmeldetag: 26.07.2014
(51) Int. Cl.: B24B 27/08, B23D 45/16, B25F 5/02, B23D 57/02, B24B 55/02, B27B 17/00

(54) **Handgeführtes Arbeitsgerät**
Manually operated work device
Appareil de travail portatif

(30) Priorität: 31.07.2013 DE 102013012746
(43) Veröffentlichungstag der Anmeldung: 04.02.2015
(73) Patentinhaber: Andreas Stihl AG & Co. KG, 71336 Waiblingen (DE)
(72) Erfinder: Elfner, Jörg, D-71397 Leutenbach (DE); Deigendesch, Tobias, D-71522 Backnang (DE); Hoche, Florian, D-74354 Besigheim (DE)
(74) Vertreter: Reinhardt, Annette

(56) Entgegenhaltungen:
- DE-A1- 3 444 116
- DE-A1- 10 023 490
- DE-A1-102005 043 118
- DE-U1-202008 015 957
- DE-U1-202010 004 413
- DE-U1-202012 102 642

## Beschreibung

Die Erfindung betrifft ein handgeführtes Arbeitsgerät der im Oberbegriff des Anspruchs 1 angegebenen Gattung.

Aus der DE 94 12 558 U1 ist ein handgeführtes Arbeitsgerät, nämlich ein Trennschleifer bekannt, dessen Trennscheibe an einem Ausleger gelagert ist. Die Trennscheibe ist über einen Antriebsriemen rotierend angetrieben. An dem Riemen wirkt eine Spannvorrichtung.

Aus der DE 34 44 116 A1 geht eine Handtrennschleifmaschine mit Staubabsaugung hervor. Die Trennscheibe ist über einen Zahnriemen angetrieben, der über geeignete Umlenkräder geführt sein soll. Zur Spannung des Antriebsriemens ist ein Umlenkrad vorgesehen, das auf den Untertrum des Zahnriemens wirkt und mit dem die Spannung des Zahnriemens veränderbar ist.

Aus der DE 100 23 490 A1 ist ein Trennschleifer bekannt, dessen Trennscheibe mittig an der Vorderseite des Gehäuses angeordnet ist. Die Trennscheibe ist über einen Antriebsriemen angetrieben, der in einem Sägearmgehäuse geführt ist. Das Sägearmgehäuse ist ebenso wie eine Führungsrollenabdeckung und eine Stützrollenabdeckung aus Metall oder verstärktem Kunststoff gefertigt, um eine hohe Widerstandsfähigkeit der Maschine zu erreichen. Die hinteren Wände vom Sägearmgehäuse und einer Anschlusswand des Motorblocks sind passgenau zueinander ausgebildet und stehen in direktem, festen Kontakt miteinander. Zur Einstellung der Riemenspannung ist ein Riemenspanner im Sägearmgehäuse angeordnet.

Die DE 20 2008 015 957 U1 zeigt ebenfalls einen Trennschleifer mit einem Riementrieb. Der Trennschleifer besitzt einen Fliehkraftabscheider.

Aus der DE 10 2005 043 118 A1 geht ein Trennschleifer hervor, dessen Ausleger ein erstes Ende und ein zweites Ende besitzt, zwischen denen eine Keilriemenspanneinrichtung wirkt.

Die DE 20 2010 004 413 U1 offenbart ein Arbeitsgerät, nämlich einen Trennschleifer, dessen Ausleger einen Grundkörper besitzt, der aus zwei zueinander verschwenkbaren Abschnitten aufgebaut ist. Dadurch soll der Antriebsriemen einfach auswechselbar sein. Der Antriebsriemen kann als Elastriemen ausgebildet sein.

Der Erfindung liegt die Aufgabe zugrunde, ein handgeführtes Arbeitsgerät der gattungsgemäßen Art zu schaffen, das einen einfachen und robusten Aufbau und eine hohe Lebensdauer besitzt.

Diese Aufgabe wird durch ein handgeführtes Arbeitsgerät mit den Merkmalen des Anspruchs 1 gelöst.

Es hat sich gezeigt, dass Verschmutzungen, die im Betrieb durch Werkstückabrieb und durch die im Betrieb zum Werkzeug zugeführte Flüssigkeit entstehen, die Lebensdauer des Riemens herabsetzen können. Es ist vorgesehen, dass der Riemenraum gegenüber der Umgebung geschlossen ausgebildet und abgedichtet ist. Die Abdichtung des Riemenraums gegenüber der Umgebung verhindert, dass Schmutz und Feuchtigkeit an den Antriebsriemen gelangen können. Dadurch kann die Lebensdauer des Antriebsriemens so erhöht werden, dass ein Austausch des Antriebsriemens über die Lebensdauer des Arbeitsgeräts nicht notwendig ist. Dadurch, dass kein Austausch des Riemens durch den Benutzer notwendig ist, kann eine Spannvorrichtung, die das Austauschen des Riemens ermöglicht, entfallen. Dadurch vereinfacht sich der Aufbau des Arbeitsgeräts.

Ein geschlossener, abgedichteter Riemenraum ist insbesondere dann zweckmäßig, wenn der Antriebsriemen ein Elastriemen ist und zur Aufrechterhaltung der Riemenspannung im Betrieb keine Spannvorrichtung benötigt wird. Elastriemen besitzen eine so hohe Eigenelastizität, dass sie keine Spannvorrichtung benötigen. Wird ein Elastriemen eingesetzt, so kann eine Riemenspannvorrichtung für den Antriebsriemen entfallen, und der Aufbau des Arbeitsgeräts vereinfacht sich.

Der Ausleger ist durch ein Auslegerbauteil und einen Deckel gebildet, wobei das Auslegerbauteil und der Deckel den Riemenraum begrenzen. Der Ausleger kann dabei neben dem Auslegerbauteil und dem Deckel auch weitere Komponenten umfassen. Ein einfacher Aufbau ergibt sich, wenn zwischen dem Auslegerbauteil und dem Deckel eine umlaufende Aufnahme ausgebildet ist, in der eine Dichtung angeordnet ist. Die Dichtung ist vorzugsweise eine ausgehärtete Flüssigdichtung, die in flüssigem Zustand eingebracht wird und nach dem Zusammenfügen von Deckel und Auslegerbauteil aushärtet. Auslegerbauteil und Deckel besitzen jeweils einen Dichtrand, der zum anderen Bauteil ragt. Die Aufnahme kann dabei an dem Dichtrand des Auslegerbauteils, dem Dichtrand des Deckels oder sowohl am Dichtrand des Auslegerbauteils als auch am Dichtrand des Deckels ausgebildet sein. Da ein Öffnen des Riemenraums durch den Bediener nicht vorgesehen ist, kann eine Dichtung zum Einsatz kommen, die beim Öffnen des Riemenraums zerstört wird. Dadurch wird ein einfacher Aufbau und eine sichere Abdichtung ermöglicht.

Das Auslegerbauteil und der Deckel begrenzen einen außerhalb des Riemenraums angeordneten Außenraum, der den Riemenraum im Bereich der Dichtung mindestens teilweise umgibt. Der Außenraum umgibt den Riemenraum mindestens an der Dichtung. Der Außenraum schützt die Dichtung gegenüber der Umgebung. Vorzugsweise ist der Außenraum gegenüber der Umgebung weitgehend geschlossen ausgebildet. Der Riemenraum bildet damit einen inneren Dichtraum und der Außenraum einen äußeren Dichtraum, der gegenüber der Umgebung weniger gut abgedichtet ist als der innere Dichtraum. Der äußere Dichtraum verhindert vorzugsweise, dass Strahlwasser oder dgl. an die Dichtung gelangen kann. Gleichzeitig wird eine starke Verschmutzung des Bereichs der Dichtung durch den Außenraum verhindert. Vorzugsweise umgibt der Außenraum den Riemenraum an der Dichtung vollständig.

Vorteilhaft besitzt der Außenraum mindestens eine Öffnung zur Umgebung, die von einem durch die Öffnung in den Außenraum ragenden Bauteil mindestens teilweise verschlossen ist. Vorzugsweise ist die Öffnung durch das Bauteil weitgehend verschlossen. Vorteilhaft besitzt das Auslegerbauteil einen Rand, der über mindestens einen Teil seiner Länge an einem Rand des Deckels anliegt. Der Außenraum ist vorzugsweise zwischen dem Riemenraum und den Rändern von Auslegerbauteil und Deckel angeordnet. Dadurch ergibt sich ein einfacher Aufbau. Für den Außenraum werden keine zusätzlichen Bauteile benötigt. Der Deckel ist vorteilhaft über mindestens ein Befestigungselement an dem Auslegerbauteil festgelegt, das sich durch den Außenraum erstreckt. Dadurch, dass sich das Befestigungselement durch den Außenraum und nicht durch den Riemenraum erstreckt, muss keine zusätzliche Abdichtung vorgesehen werden. Dadurch, dass das Befestigungselement sich durch den Außenraum und nicht durch einen außerhalb des Außenraums angeordneten Bereich erstreckt, kann ein kompakter Aufbau realisiert werden. Vorzugsweise erstrecken sich alle Befestigungselemente für den Deckel durch den Außenraum.

Das Arbeitsgerät besitzt vorzugsweise eine Wasserleitung zur Zufuhr von Wasser zu dem Werkzeug. Mindestens ein Abschnitt der Wasserleitung ist vorteilhaft durch den Außenraum geführt. Dadurch ergibt sich ein kompakter Aufbau. Auch die Wasserleitung kann ein Bauteil bilden, das eine in den Außenraum führende Öffnung zur Umgebung mindestens teilweise verschließt. Dadurch, dass die Wasserleitung mindestens teilweise durch den Außenraum geführt ist, kann ein ansprechendes Äußeres des Arbeitsgeräts erreicht werden. Gleichzeitig ist die Lage der Wasserleitung aufgrund der Anordnung in dem Außenraum gesichert, und es werden keine zusätzlichen Befestigungsvorrichtungen für diesen Abschnitt der Wasserleitung benötigt.

Vorteilhaft besitzt das Arbeitsgerät eine Schutzhaube für das Werkzeug, die das Werkzeug teilweise abdeckt. Ein einfacher Aufbau ergibt sich, wenn die Schutzhaube einteilig mit dem Auslegerbauteil ausgebildet ist. Befestigungselemente für die Schutzhaube können entfallen. Eine besonders vorteilhafte Ausgestaltung ergibt sich, wenn eine Wand des Auslegerbauteils den Riemenraum begrenzt und gleichzeitig einen Abschnitt der Schutzhaube bildet. Dadurch werden Wanddoppelungen vermieden, und das Gesamtgewicht des Arbeitsgeräts kann gesenkt werden. Das Auslegerbauteil ist vorzugsweise als tragendes Gehäusebauteil ausgebildet. Vorzugsweise besteht das Auslegerbauteil aus Metall, insbesondere aus einem Leichtmetall. Eine günstige Krafteinleitung kann erreicht werden, wenn das Arbeitsgerät einen Griffbügel besitzt und mindestens ein Ende des Griffbügels an dem Auslegerbauteil ausgelegt ist. Dadurch kann ein Großteil der am Arbeitsgerät wirkenden Kräfte unmittelbar in das Auslegerbauteil eingeleitet werden. Vorzugsweise sind beide Enden des Griffbügels an dem Auslegerbauteil festgelegt. Weitere Gehäusebauteile können mit geringer Festigkeit ausgerührt werden und beispielsweise aus Kunststoff bestehen, so dass sich insgesamt ein geringes Gesamtgewicht des Arbeitsgeräts ergibt. Die Ausbildung des Auslegerbauteils als tragendes Gehäusebauteil stellt einen eigenständigen, von der Abdichtung des Riemenraums gegenüber der Umgebung unabhängigen Erfindungsgedanken dar.

Vorteilhaft besitzt das Arbeitsgerät eine Arretiervorrichtung für das Werkzeug. Die Arretiervorrichtung für das Werkzeug ist insbesondere für den Werkzeugwechsel zum Lösen einer Befestigungsmutter des Werkzeugs vorgesehen. Die Arretiervorrichtung weist vorteilhaft einen durch eine Wand des Riemenraums ragenden Arretierbolzen auf, der längsverschieblich gelagert ist. Vorteilhaft ist der Arretierbolzen gegenüber der Wand des Riemenraums abgedichtet. Die Abdichtung kann dabei unmittelbar gegenüber der Wand des Riemenraums oder mittelbar über weitere Bauteile, die dichtend mit der Wand des Riemenraums verbunden sind, erfolgen. Dadurch kann der Riemenraum trotz des in den Riemenraum ragenden, beweglichen Arretierbolzens gegenüber der Umgebung abgedichtet ausgebildet werden.

Vorteilhaft ist der Antriebsmotor des Arbeitsgeräts am Auslegerbauteil fixiert. Das Auslegerbauteil bildet dadurch ein tragendes Gehäusebauteil für den Antriebsmotor. Der Antriebsmotor ist vorzugsweise ein Elektromotor, insbesondere ein von einem Akku mit Energie versorgter Elektromotor. Der Elektromotor kann jedoch auch über ein Stromkabel mit Energie versorgt werden. Es kann auch vorgesehen sein, dass der Antriebsmotor ein Verbrennungsmotor, insbesondere ein Einzylindermotor, vorzugsweise ein Zweitaktmotor oder ein gemischgeschmierter Viertaktmotor ist. Besonders vorteilhaft sind sowohl der Antriebsmotor als auch die Schutzhaube und der Griffbügel an dem Auslegerbauteil fixiert. Dadurch ergeben sich ein vorteilhafter Aufbau und eine gute Krafteinleitung in das Auslegerbauteil. Die am Arbeitsgerät wirkenden Kräfte werden hauptsächlich in das Auslegerbauteil eingeleitet, das eine Tragstruktur des Arbeitsgeräts bildet.

Insbesondere ragt mindestens ein Befestigungselement, mit dem der Antriebsmotor am Auslegerbauteil fixiert ist, in den Riemenraum. Das Befestigungselement ist dabei vorteilhaft dichtend im Riemenraum angeordnet, so dass der Riemenraum gegenüber der Umgebung vollständig geschlossen und abgedichtet ausgebildet ist. Der Antriebsriemen ist vorteilhaft über eine drehfest mit einer Antriebswelle verbundene Antriebsscheibe und eine drehfest mit einer Abtriebswelle verbundene Abtriebsscheibe geführt. Die Antriebswelle und die Abtriebswelle ragen vorteilhaft durch eine Wand des Riemenraums. Der Riemenraum ist an der Antriebswelle vorteilhaft über mindestens ein Lager der Antriebswelle und an der Abtriebswelle über mindestens ein Lager der Abtriebswelle abgedichtet. Dadurch kann auch an Antriebswelle und Abtriebswelle das Eindringen von Schmutz oder Feuchtigkeit in den Riemenraum sicher verhindert werden. Dadurch, dass die Dichtungen der Lager genutzt werden, um den Riemenraum gegenüber der Umgebung abzudichten, können separate Dichtungen entfallen. Es ergibt sich ein einfacher Aufbau. Vorzugsweise ist der Antriebsriemen ein Elastriemen. Der Abstand der Antriebsscheibe zur Abtriebsscheibe ist vorteilhaft fix und unveränderbar. Eine Spannvorrichtung, die den Abstand der Antriebsscheibe zur Abtriebsscheibe verändert, ist vorteilhaft nicht vorgesehen. Dadurch wird ein einfacher Aufbau erreicht. Die Abtriebsscheibe und die Antriebsscheibe sind vorteilhaft fest auf der Abtriebswelle bzw. der Antriebswelle gelagert. Beim Einsatz eines Elastriemens kann eine Spannvorrichtung für den Antriebsriemen entfallen, so dass sich ein einfacher Aufbau ergibt.

Ein Ausführungsbeispiel der Erfindung wird im Folgenden anhand der Zeichnung erläutert. Es zeigen:
- Fig. 1: eine Seitenansicht eines Trennschleifers,
- Fig. 2: eine Draufsicht in Richtung des Pfeils II in Fig. 1,
- Fig. 3: eine Ansicht von unten in Richtung des Pfeils III in Fig. 1,
- Fig. 4: eine Explosionsdarstellung des Auslegers des Trennschleifers aus Fig. 1,
- Fig. 5: eine Seitenansicht des Auslegers,
- Fig. 6: einen Schnitt entlang der Linie VI-VI in Fig. 5,
- Fig. 7: die Einzelheit VII aus Fig. 6 in vergrößerter Darstellung,
- Fig. 8: eine Seitenansicht des Auslegers mit abgenommenem Deckel,
- Fig. 9: eine Ansicht von oben in Richtung des Pfeils IX in Fig. 8,
- Fig. 10: eine Ansicht von oben auf den Deckel,
- Fig. 11: eine Seitenansicht des Deckels in Richtung des Pfeils XI in Fig. 10,
- Fig. 12: eine Seitenansicht des Deckels in Richtung des Pfeils XII in Fig. 10,
- Fig. 13: einen Schnitt entlang der Linie XIII-XIII in Fig. 1,
- Fig. 14: einen Schnitt entlang der Linie XIV-XIV in Fig. 1,
- Fig. 15: eine ausschnittsweise Schnittdarstellung entlang der Linie XV-XV in Fig. 1,
- Fig. 16: eine Seitenansicht auf das Auslegerbauteil mit daran angeordnetem Griffbügel,
- Fig. 17: einen Schnitt entlang der Linie XVII-XVII in Fig. 2,
- Fig. 18: eine ausschnittsweise Schnittdarstellung entlang der Linie XVIII-XVIII in Fig. 1.

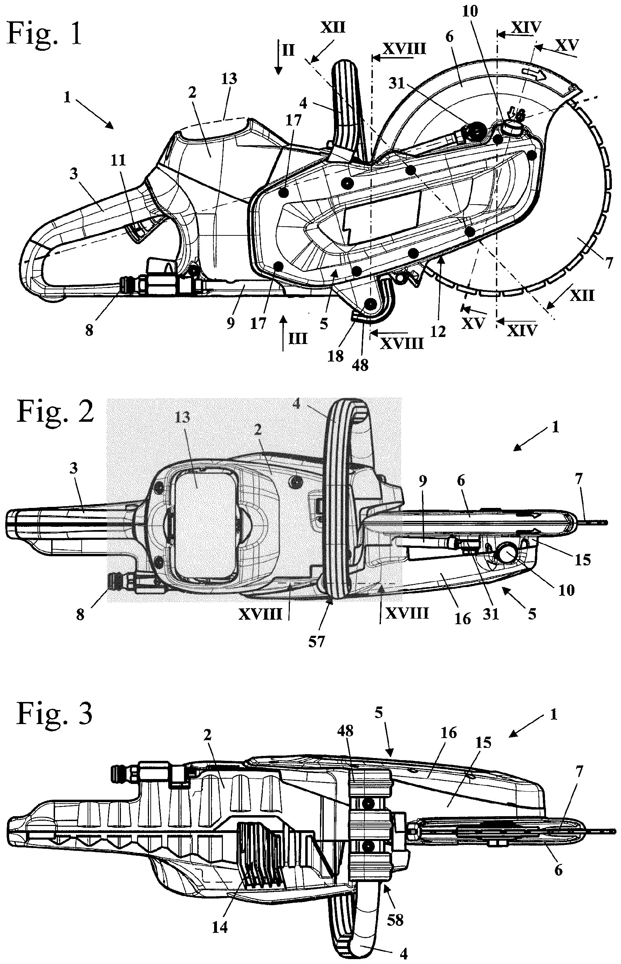

Fig. 1 zeigt als Ausführungsbeispiel für ein handgeführtes Arbeitsgerät einen Trennschleifer 1. Der Trennschleifer 1 besitzt ein Gehäuse 2, an dem ein Handgriff 3 festgelegt ist. Im Ausführungsbeispiel ist der Handgriff 3 als hinterer Handgriff ausgebildet. Der Trennschleifer 1 besitzt außerdem einen Griffbügel 4, der das Gehäuse 2 mindestens teilweise übergreift. Am Gehäuse 2 ist ein Ausleger 5 angeordnet, der auf der dem hinteren Handgriff 3 abgewandten Seite des Gehäuses 2 nach vorne ragt. Am Ausleger 5 ist eine Schutzhaube 6 festgelegt, die das Werkzeug des Trennschleifers 1, nämlich eine Trennscheibe 7, teilweise abdeckt. Am Ausleger 5 ist eine Arretiervorrichtung 10 angeordnet, die im Bereich des dem Gehäuse 2 abgewandten Endes des Auslegers 5 angeordnet ist und deren Funktion im Folgenden noch näher beschrieben wird. Wie Fig. 1 auch zeigt, ist an der Schutzhaube 6 eine Ableitkante 12 angeordnet, die dazu dient, Flüssigkeit im Betrieb nach unten zum Boden abzuleiten. Die Ableitkante 12 ist an der im üblichen Betrieb unten angeordneten, dem Ausleger 5 zugewandten Längsseite der Schutzhaube 6 angeordnet.

Der Trennschleifer 1 besitzt einen Wasseranschluss 8, der über eine Wasserleitung 9 mit einem an der Schutzhaube 6 montierten Anschlusselement 31 verbunden ist. Am Wasseranschluss 8 kann eine Leitung zur Verbindung mit einem Wassertank oder einer externen Wasserversorgung angeschlossen werden. Am Anschlusselement 31 wird Wasser zur Kühlung der Trennscheibe 7 und zum Binden des mit der Trennscheibe 7 getrennten Materials ins Innere der Schutzhaube 6 zugeführt. Der Staub tropft zusammen mit dem Wasser als Schlamm an der Ableitkante 12 nach unten. Die Ableitkante 12 ist benachbart zur Trennscheibe 7 angeordnet und erstreckt sich parallel zur Trennscheibe 7, wie Fig. 1 zeigt.

Im Gehäuse 2 ist zur Energieversorgung eines in Fig. 1 nicht gezeigten Antriebsmotors ein Akku 13 angeordnet. Im Ausführungsbeispiel ist der Akku 13 in einen Schacht im Gehäuse 2 eingeschoben. Der Antriebsmotor kann jedoch auch über ein elektrisches Anschlusskabel mit einer Energieversorgung verbunden sein. Am hinteren Handgriff 3 ist ein Bedienhebel 11 zur Bedienung des Antriebsmotors schwenkbar gelagert.

Wie die Figuren 2 und 3 zeigen, ist der Ausleger 5 von einem Auslegerbauteil 15 und einem Deckel 16 gebildet. Der Deckel 16 ist über in Fig. 1 gezeigte Befestigungsschrauben 17 am Auslegerbauteil 15 fixiert. Zur Fixierung eines unteren Endes des Griffbügels 4 ist eine Befestigungsschraube 18 vorgesehen, die im Folgenden noch näher beschrieben wird. Wie insbesondere Fig. 2 zeigt, ist die Schutzhaube 6 am Auslegerbauteil 15 angeformt, also einteilig mit diesem ausgebildet. Das Auslegerbauteil 15 ist vorteilhaft in einem Gussverfahren aus Metall, insbesondere aus Leichtmetall wie Magnesium oder Aluminium hergestellt. Wie Fig. 2 zeigt, ist ein erstes Ende 57 des Griffbügels 4 am Ausleger 5, und zwar an einer Oberseite des Auslegers 5, gehalten. Fig. 3 zeigt ein zweites Ende 58 des Griffbügels 4, das an der Unterseite des Gehäuses 2 verläuft und über die Befestigungsschraube 18 am Ausleger 5 fixiert ist. Das zweite Ende 58 des Griffbügels 4 ist von einer in den Figuren 1 und 3 gezeigten Abdeckung 48 abgedeckt, die gleichzeitig als Standfuß für den Trennschleifer 1 dient. Wie Fig. 3 zeigt, besitzt das Gehäuse 2 an der im üblichen Betrieb nach unten gewandten Seite eine Kühlluftaustrittsöffnung 14, über die mehrere Rippen verlaufen.

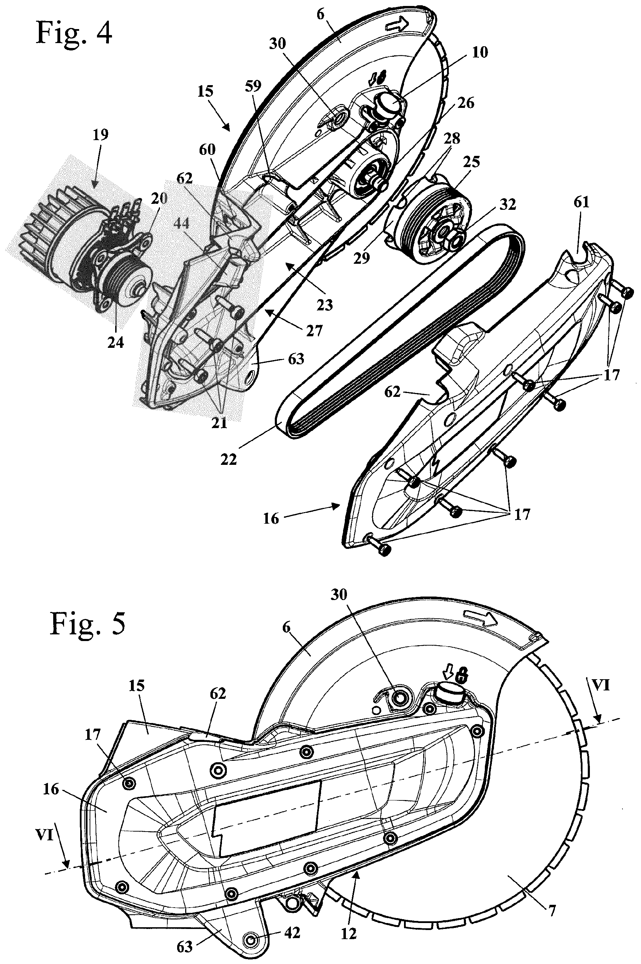

Fig. 4 zeigt den Aufbau des Auslegers 5 im Einzelnen. Am Ausleger 5, und zwar am Auslegerbauteil 15, ist der Antriebsmotor 19 fixiert. Der Antriebsmotor 19 besitzt einen Befestigungsflansch 20, der im Ausführungsbeispiel über drei Befestigungsschrauben 21 am Auslegerbauteil 15 fixiert ist. Der Antriebsmotor 19 treibt eine Antriebsscheibe 24 an, die als topfförmige Riemenscheibe ausgebildet ist. Am Außenumfang der Antriebsscheibe 24 ist ein Antriebsriemen 22 geführt. Der Antriebsriemen 22 ist über eine Abtriebsscheibe 25 geführt, die im Ausführungsbeispiel ebenfalls als topfförmige Riemenscheibe ausgebildet ist. Über den Antriebsriemen 22 wird die Abtriebsscheibe 25 von der Antriebsscheibe 24 rotierend angetrieben. Die Abtriebsscheibe 25 ist auf einer Abtriebswelle 26 drehfest fixiert. In axialer Richtung ist die Abtriebsscheibe 25 an der Abtriebswelle 26 über eine Befestigungsmutter 32 fixiert. Der Antriebsriemen 22 ist als Elastriemen ausgebildet. Der Elastriemen besitzt eine so hohe Elastizität und Eigenspannung, dass eine Spannvorrichtung für den Elastriemen nicht notwendig ist.

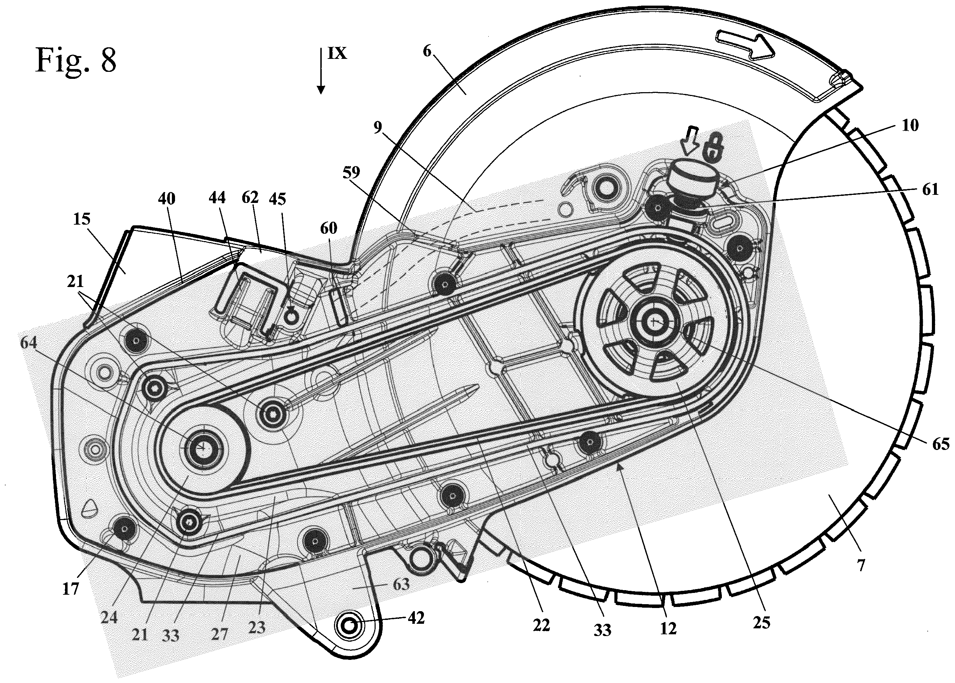

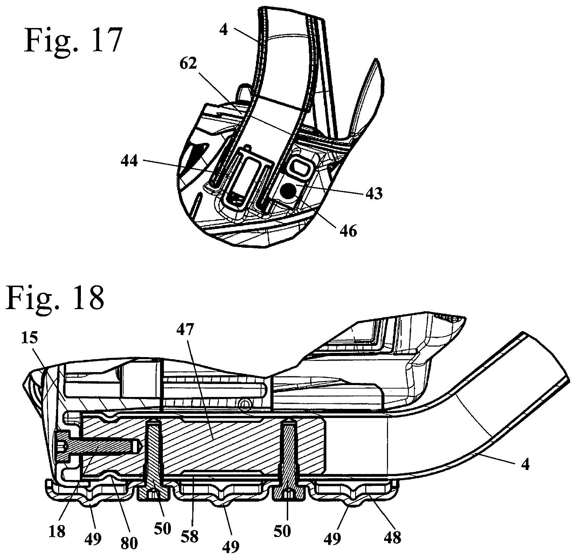

Der Antriebsriemen 22 ist gemeinsam mit der Antriebsscheibe 24 und der Abtriebsscheibe 25 in einem Riemenraum 23 angeordnet, der vom Auslegerbauteil 15 und vom Deckel 16 begrenzt ist. Der Riemenraum 23 ist von einem Außenraum 27 umgeben. Der Riemenraum 23 ist gegenüber der Umgebung staubdicht, feuchtigkeitsdicht und spritz- und strahlwasserdicht abgedichtet. Der Außenraum 27 ist nur teilweise abgedichtet und besitzt zur Umgebung Öffnungen 59, 60, 61 und 62. Durch die Öffnungen 59 und 60 ist die Wasserleitung 9 geführt, wie Fig. 8 schematisch zeigt. Durch die Öffnung 61 ragt die Arretiervorrichtung 10. Durch die Öffnung 62 ragt der Griffbügel 4, wie Fig. 17 zeigt. Wie Fig. 4 zeigt, ragt in die Öffnung 62 ein Stutzen 44, auf den der Griffbügel 4, der in Fig. 17 gezeigt ist, aufgesteckt ist. Die Wasserleitung 9, der Griffbügel 4 und die Arretiervorrichtung 10 verschließen die Öffnungen 59 bis 62 mindestens teilweise. Im Ausführungsbeispiel sind die Öffnungen 59 bis 61 weitgehend verschlossen. Dadurch können durch die Öffnungen 59 bis 61 nur geringe Mengen an Staub oder Feuchtigkeit in den Außenraum 27 eindringen. Ein Eindringen eines Wasserstrahls ist weitgehend verhindert. Der Außenraum 27 bildet einen äußeren Dichtraum, der gegenüber der Umgebung weitgehend geschlossen ausgebildet ist und den Riemenraum 23 umgibt. Der Riemenraum 23 bildet einen inneren, gegenüber der Umgebung vollständig geschlossenen und abgedichteten Raum. Der Außenraum 27 schützt den Riemenraum 23 vor Strahlwasser und starken Verschmutzungen.

Die Befestigungsschrauben 17, mit denen der Deckel 16 am Auslegerbauteil 15 fixiert ist, ragen durch den Außenraum 27. Im Ausführungsbeispiel sind die Befestigungsschrauben 17 in Schraubdome eingeschraubt, die im Außenraum 27 angeordnet sind. Die Abtriebsscheibe 25 besitzt Ausnehmungen 28, die an einem Rand 29 der Abtriebsscheibe 25 ausgebildet sind. In die Ausnehmungen 28 greift die Arretiervorrichtung 10 zur temporären drehfesten Fixierung der Abtriebsscheibe 25 und damit der Abtriebswelle 26 ein. Die Arretiervorrichtung 10 dient dazu, die Abtriebswelle 26 beim Austausch der Trennscheibe 7 zeitweise drehfest zu fixieren. Die Schutzhaube 6 besitzt eine Öffnung 30 für die Zufuhr von Wasser ins Innere der Schutzhaube 6.

Wie die Figuren 4 und 5 zeigen, besitzt das Auslegerbauteil 15 einen Fortsatz 63, der eine Öffnung 42 für die in Fig. 1 gezeigte Befestigungsschraube 18 für den Griffbügel 4 aufweist. In Fig. 5 ist auch der Verlauf der Ableitkante 12 an der Schutzhaube 6 gezeigt.

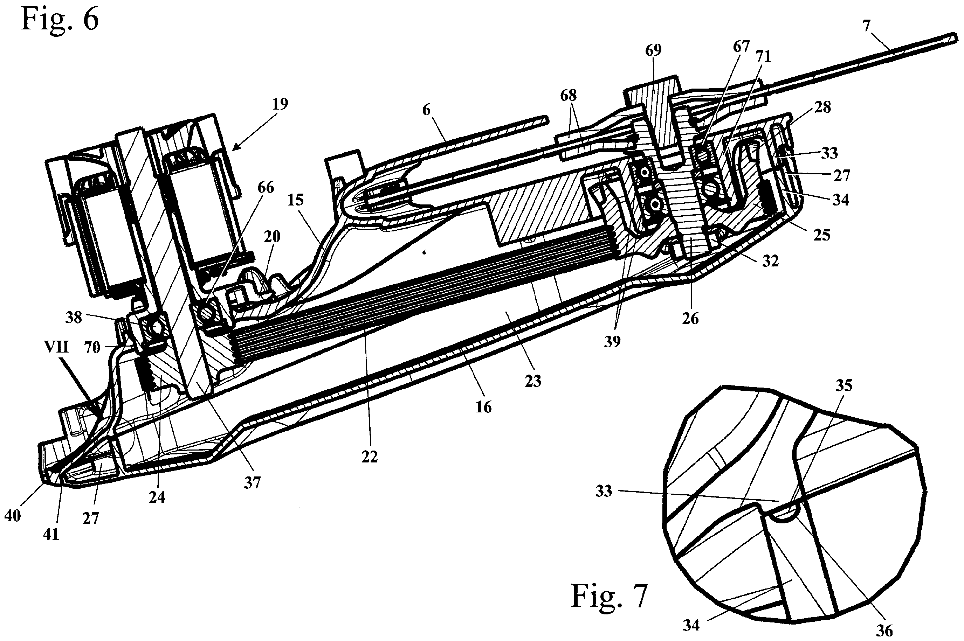

Fig. 6 zeigt den Aufbau des Antriebs der Trennscheibe 7 im Einzelnen. Der Antriebsmotor 19 besitzt eine Antriebswelle 37, die mit einem Lager 38 am Auslegerbauteil 15 drehbar gelagert ist. Das Lager 38 ist im Befestigungsflansch 20 angeordnet und besitzt eine Dichtung 66. Über die Dichtung 66 des Lagers 38 ist der Riemenraum 23 am Lager 38 zur Umgebung hin abgedichtet. Der Befestigungsflansch 20 des Antriebsmotors 19 ist in einer Öffnung 70 angeordnet. Der Befestigungsflansch 20 ist vorzugsweise in die Öffnung 70 eingepresst. Der Befestigungsflansch 20 und das Auslegerbauteil 15 bestehen vorteilhaft aus Metall. Die beiden aneinanderstoßenden metallischen Bauteile bilden keine luftdichte Verbindung, so dass zwischen Befestigungsflansch 20 und Öffnung 70 ein Druckausgleich zwischen Riemenraum 23 und Umgebung möglich ist.

Wie Fig. 6 zeigt, besitzt der Ausleger 5 eine topfförmige Aufnahme 71, in der zwei Lager 39 für die Abtriebswelle 26 angeordnet sind. Die Lager 38 und 39 sind im Ausführungsbeispiel als Kugellager ausgebildet. Auch andere Lager, vorzugsweise Wälzlager, können jedoch vorteilhaft sein. Das benachbart zur Trennscheibe 7 angeordnete Lager 39 besitzt eine Dichtung 67, mit der der Riemenraum 23 an der Abtriebswelle 26 zur Umgebung abgedichtet ist. Die Trennscheibe 7 ist zwischen zwei Klemmscheiben 68 gehalten und über eine Schraube 69 an der Abtriebswelle 26 fixiert. Wie Fig. 6 auch zeigt, begrenzt ein Teil der Schutzhaube 6 den Riemenraum 23. Dadurch, dass die Schutzhaube 6 selbst den Riemenraum 23 begrenzt, werden Wanddoppelungen vermieden, und durch das Anformen der Schutzhaube 6 kann das Gesamtgewicht des Trennschleifers 1 verringert werden.

Wie Fig. 6 auch zeigt, besitzt das Auslegerbauteil 15 einen Dichtrand 33, der als umlaufender Rand ausgebildet ist. Der Deckel 16 besitzt einen Dichtrand 34, der ebenfalls umlaufend ausgebildet ist und stirnseitig am Dichtrand 33 aufliegt. Wie die vergrößerte Darstellung in Fig. 7 zeigt, ist zwischen den Dichträndern 33 und 34 eine Dichtung 35 angeordnet, die den Riemenraum 23 gegenüber der Umgebung abdichtet. Im Ausführungsbeispiel besitzt der Dichtrand 34 des Deckels 16 eine Aufnahme 36 für die Dichtung 35, die als Nut ausgebildet ist. Die Aufnahme 36 kann jedoch auch im Dichtrand 33 ausgebildet sein. Es kann auch vorgesehen sein, sowohl im Dichtrand 33 als auch im Dichtrand 34 eine Aufnahme für die Dichtung 35 vorzusehen. Die Dichtung 35 ist vorzugsweise eine ausgehärtete Flüssigdichtung. Dadurch kann auf einfache Weise eine hohe Dichtheit erreicht werden. Da der Antriebsriemen 22 als Elastriemen ausgebildet ist und nicht ausgetauscht werden muss, muss der Deckel 16 nicht vom Auslegerbauteil gelöst werden können, ohne die Dichtung 35 zu zerstören. Wie Fig. 6 auch zeigt, umgibt der Außenraum 27 den Riemenraum 23 im Bereich der Dichtränder 33 und 34. Dadurch ist die Dichtung 35 an der dem Riemenraum 23 abgewandten Seite an jeder Stelle vom Außenraum 27 umgeben und dadurch vor Umgebungseinflüssen geschützt. Das Auslegerbauteil 15 besitzt einen Rand 40, der benachbart zu einem Rand 41 des Deckels 16 angeordnet ist. Die Ränder 40 und 41 können, wie Fig. 6 zeigt, überlappend angeordnet sein, um den Außenraum 27 nach Art einer Labyrinthdichtung abzudichten. Die Abdichtung des Außenraums 27 muss dabei nicht vollständig staubdicht oder flüssigkeitsdicht sein. Durch den Außenraum 27 wird die Dichtung 35 jedoch vor groben Verschmutzungen und vor Strahlwasser geschützt.

Wie Fig. 8 zeigt, umgibt der Außenraum 27 den Riemenraum 23 vollständig. Durch den Außenraum 27 ragen die Befestigungsschrauben 17 für den Deckel 16. Die Befestigungsschrauben 21 für den Befestigungsflansch 20 des Antriebsmotors ragen in den Riemenraum 23. Die Antriebsscheibe 24 ist um eine Drehachse 64 drehbar gelagert und die Abtriebsscheibe 25 um eine Drehachse 65. Der Abstand der Drehachsen 64 und 65 zueinander ist fest und nicht veränderbar. Um den Antriebsriemen 22 zu montieren, ist vorteilhaft ein Spezialwerkzeug vorgesehen.

In Fig. 8 ist auch der in die Öffnung 62 ragende Stutzen 44 gut sichtbar. Benachbart zum Stutzen 44 besitzt das Auslegerbauteil 15 eine Öffnung 45, die als Gewindebohrung ausgeführt sein kann. Wie Fig. 17 zeigt, ist das erste Ende 57 des Griffbügels 4 am Stutzen 44 so angeordnet, dass der Stutzen 44 ins Innere des Griffbügels 4 ragt. Der Griffbügel 4 ragt dabei durch die Öffnung 62. Am Außenumfang des Griffbügels 4 ist eine Befestigungsschelle 43 angeordnet, die über eine Spannschraube 46 fixiert wird. Die Spannschraube 46 ist in die Öffnung 45 (Fig. 8) eingeschraubt. Über die Befestigungsschelle 43 wird der Griffbügel 4 am Stutzen 44 festgespannt. Fig. 18 zeigt die Anordnung des Griffbügels 4 am Außenumfang des Stutzens 44. Die Spannschraube 46 ist geschnitten gezeigt.

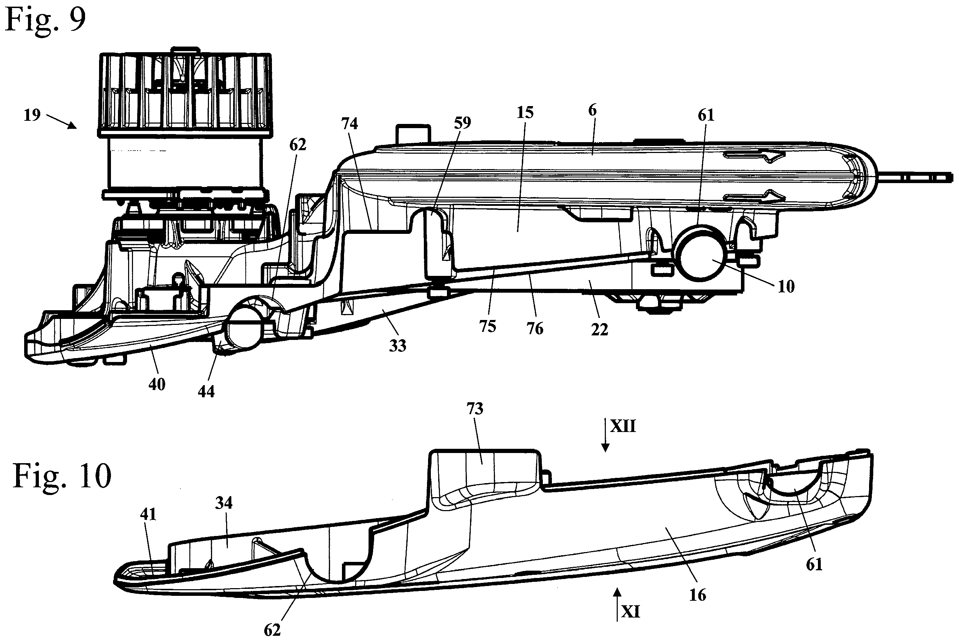

Wie die Figuren 9 und 10 zeigen, werden die Öffnungen 61 und 62 jeweils sowohl vom Auslegerbauteil 15 als auch vom Deckel 16 begrenzt. Die Öffnung 59 ist als Ausnehmung am Auslegerbauteil 15 ausgebildet und wird von einem Abschnitt 73 des Deckels 16 begrenzt, der in eine entsprechend ausgebildete Vertiefung 74 am Rand 40 des Auslegerbauteils 15 ragt. Dadurch kann die Öffnung 59 unmittelbar benachbart zur Schutzhaube 6 in einem Abstand zu einer Stirnseite 75 des Rands 40 angeordnet werden. Wie die Figuren 9 und 10 zeigen, verläuft die Stirnseite 75 des Rands 40 ebenso wie die Stirnseite 76 des Dichtrands 33 gegenüber der Längsrichtung des Antriebsriemens 22 geneigt.

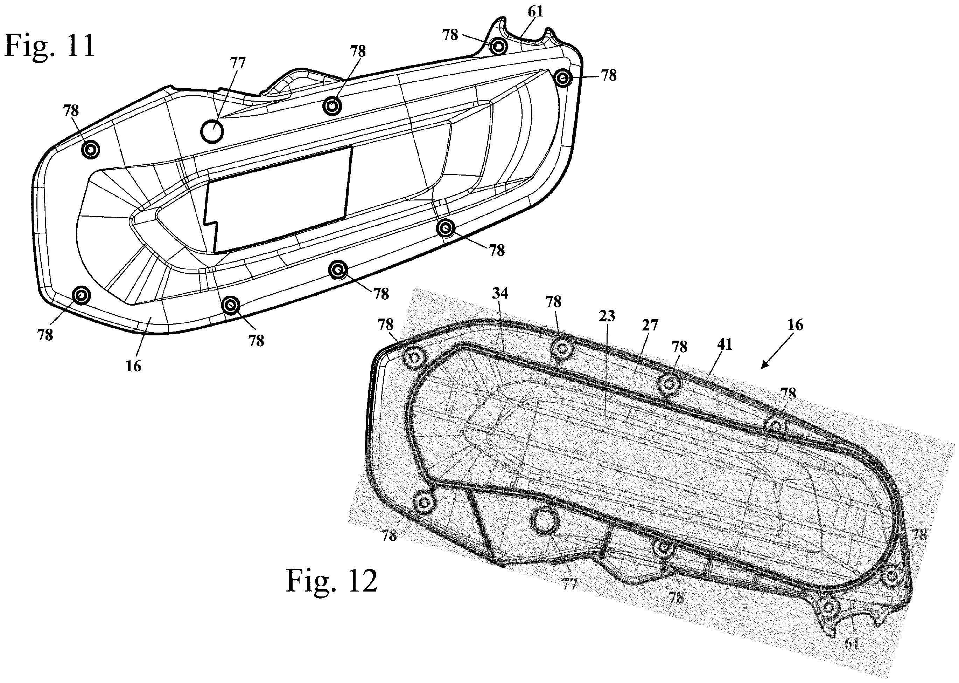

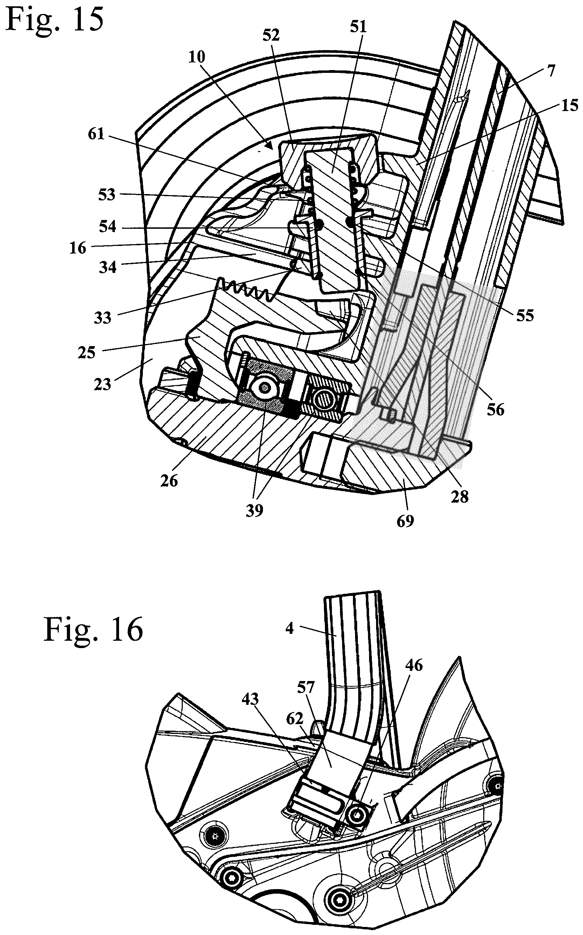

Die Figuren 11 und 12 zeigen den Deckel 16. Der Deckel 16 besitzt acht Öffnungen 78, durch die die Befestigungsschrauben 17 ragen. Der Deckel 16 besitzt außerdem eine Öffnung 77, die im Bereich der Spannschraube 46 (Fig. 16) angeordnet ist, damit die Spannschraube 46 von außen zugänglich ist und vom Bediener bei Bedarf nachgespannt werden kann. Wie Fig. 12 zeigt, liegt der Dichtrand 34 vollständig innerhalb des Rands 41. Der Außenraum 27 umgibt den Riemenraum 23 dadurch vollständig. Der Riemenraum 23 ist im Ausführungsbeispiel im Bereich des vorderen, freien Endes des Auslegers 5 (Fig. 1) sehr schmal ausgebildet. Alle Öffnungen 78 und die Öffnung 77 münden in den Außenraum 27. Die Öffnungen 77 und 78 beeinträchtigen dadurch die Dichtheit des Riemenraums 23 nicht.

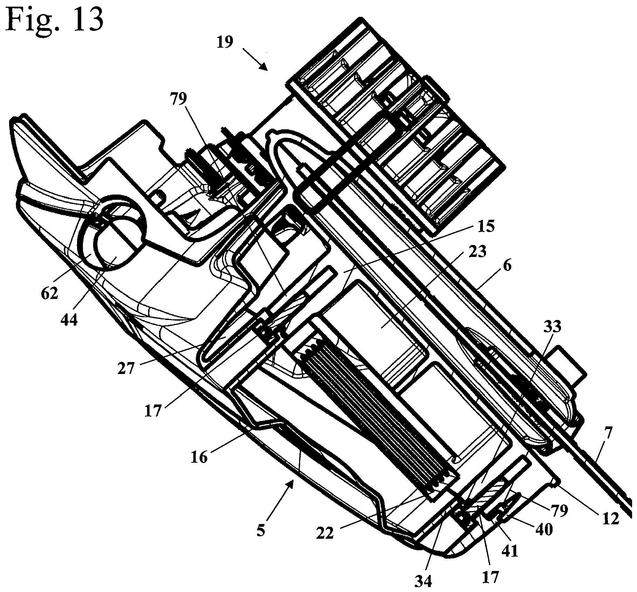

Fig. 13 zeigt die Anordnung von zwei Befestigungsschrauben 17. Die Befestigungsschrauben 17 sind von der Außenseite des Deckels 16 aus in einen Schraubdom 79 des Auslegerbauteils 15 eingeschraubt, der sich in den Außenraum 27 erstreckt. In der in Fig. 13 gezeigten Schnittebene sind beide Schraubdome 79 unmittelbar benachbart zum Dichtrand 33 angeordnet. Die Schraubdome 79 erstrecken sich außerhalb der Dichtung 35 (Fig. 7) im Außenraum 27.

In Fig. 13 ist die Ableitkante 12 im Schnitt gezeigt. Die Ableitkante 12 ist als Erhöhung am Ausleger 5 ausgebildet. Dadurch bildet die Ableitkante 12 einen Verschleißschutz für den Ausleger 5. Die Ableitkante 12 bildet bei einem tiefen Schnitt einen Anschlag, der einen Kontakt des Auslegers mit dem Werkstück vermeidet.

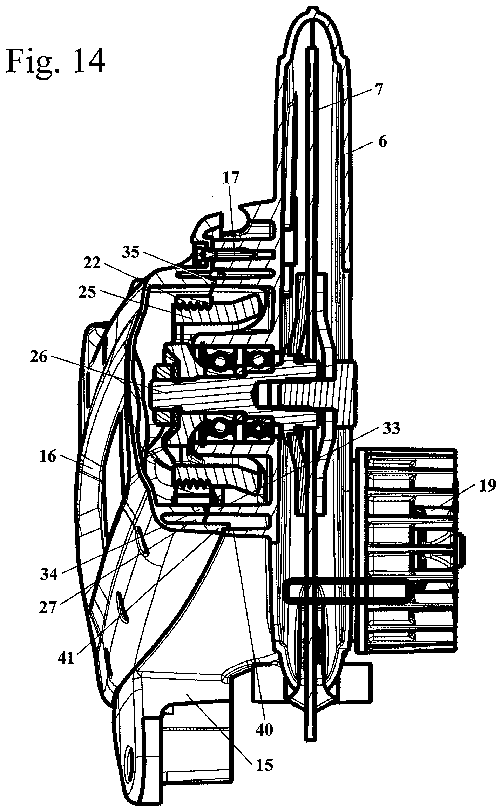

Fig. 14 zeigt die Gestaltung von Riemenraum 23 und Außenraum 27 im Bereich der Abtriebsscheibe 25. Auch die hier angeordnete Befestigungsschraube 17 ragt durch den Außenraum 27 und ist gegenüber dem Riemenraum 23 von der Dichtung 35 abgedichtet. Wie Fig. 14 auch zeigt, überlappen die Ränder 41 und 40 von Deckel 16 und Auslegerbauteil 15, so dass sich durch den Außenraum 27 ein guter Schutz der Dichtung 35 gegen Spritzwasser und Verschmutzung ergibt.

Fig. 15 zeigt die Arretiervorrichtung 10 im Einzelnen. Die Arretiervorrichtung 10 dient dazu, die Abtriebswelle 26 temporär drehfest zu fixieren, damit die Schraube 69 beispielsweise beim Austausch der Trennscheibe 7 gelöst und fixiert werden kann. Die Arretiervorrichtung 10 umfasst einen Arretierbolzen 51, an dem ein Betätigungselement 52 fixiert ist. Das Betätigungselement 52 ragt durch die Öffnung 61 in den Außenraum 27. Die Arretiervorrichtung 10 besitzt eine Buchse 54, die in eine Wand des Riemenraums 23, im Ausführungsbeispiel in den Dichtrand 33, dichtend eingepresst ist. Die Buchse 54 kann auch in die Wand des Riemenraums 23 eingeklebt oder auf andere Weise dichtend in der Wand des Riemenraums 23 festgelegt sein. Der Arretierbolzen 51 ist verschiebbar in der Buchse 54 gelagert und in der in Fig. 15 gezeigten vollständig nach außen geschobenen Position über einen Sprengring 56 gegen Herausfallen gesichert. Gegenüber der Buchse 54 ist der Arretierbolzen 51 über eine Dichtung 55, im Ausführungsbeispiel einen O-Ring abgedichtet. Die Dichtung 55 ist am Außenumfang des Arretierbolzens 51 in einer Nut gehalten. Der Arretierbolzen 51 ist von einer Feder 53, die als Schraubendruckfeder ausgebildet ist, in seine nach außen geschobene Stellung vorgespannt. Wird der Arretierbolzen 51 entgegen der Kraft der Feder 53 in den Ausleger 5 gedrückt, so kommt er in einer Ausnehmung 28 der Abtriebsscheibe 25 zu liegen und blockiert dadurch eine Drehbewegung der Abtriebsscheibe 25 und der Abtriebswelle 26, bis der Arretierbolzen 51 von der Feder 53 wieder nach außen gedrückt wird, beispielsweise, wenn der Bediener das Betätigungselement 52 loslässt.

In Fig. 15 sind auch die Lager 39 gezeigt, mit denen die Abtriebswelle 26 im Auslegerbauteil 15 drehbar gelagert ist. Am Sitz der Lager 39 auf der Abtriebswelle 26 und im Auslegerbauteil 15 liegt das Metall der Lager 39 am Metall von Abtriebswelle 26 bzw. Auslegerbauteil 15 an. Da der metallische Kontakt keine luftdichte Verbindung ermöglicht, ist zwischen den Außenringen der Lager 39 und dem Auslegerbauteil 15 sowie zwischen den Innenringen der Lager 39 und der Abtriebswelle 26 ein Luftdurchtritt möglich, der einen Druckausgleich zwischen dem Riemenraum 23 und der Umgebung ermöglicht. Ein Eindringen von Wasser oder Verschmutzungen ist jedoch nicht möglich, so dass der Riemenraum 23 wasserdicht gegenüber Spritzwasser und Strahlwasser und staubdicht ist.

Fig. 18 zeigt die Fixierung des zweiten Endes 58 des Griffbügels 4 am Auslegerbauteil 15. Am zweiten Ende 58 ist ein Einsatz 47 in den Griffbügel 4 eingeschoben und am Griffbügel 4 fixiert. Im Ausführungsbeispiel ist hierzu eine umlaufende Einschnürung 80 am Griffbügel 4 vorgesehen, die in eine entsprechende Vertiefung des Einsatzes 47 ragt. Die Befestigungsschraube 18 ist stirnseitig in den Einsatz 47 eingeschraubt und fixiert dadurch den Einsatz 47 an dem Auslegerbauteil 15. Am Einsatz 47 ist außerdem die Abdeckung 48 über zwei Befestigungsschrauben 50 fixiert. Die Abdeckung 48 besitzt Erhöhungen 49, die als Standfuß für den Trennschleifer 1 dienen.

## Patentansprüche

1. Handgeführtes Arbeitsgerät mit einem Werkzeug, das an einem Ausleger (5) gelagert ist, und mit einem Antriebsmotor (19), wobei das Werkzeug von dem Antriebsmotor (19) über mindestens einen Antriebsriemen (22) rotierend angetrieben ist, und wobei der Antriebsriemen (22) in einem in dem Ausleger (5) gebildeten Riemenraum (23) angeordnet ist, wobei der Ausleger (5) durch ein Auslegerbauteil (15) und einen Deckel (16) gebildet ist, wobei das Auslegerbauteil (15) und der Deckel (16) den Riemenraum (23) begrenzen, **dadurch gekennzeichnet, dass** der Riemenraum (23) gegenüber der Umgebung geschlossen ausgebildet und abgedichtet ist, dass der Antriebsriemen (22) als Elastriemen ausgebildet ist, dass zwischen dem Auslegerbauteil (15) und dem Deckel (16) eine umlaufende Aufnahme (36) ausgebildet ist, in der eine Dichtung (35) angeordnet ist und dass Auslegerbauteil (15) und Deckel (16) einen außerhalb des Riemenraums (23) angeordneten Außenraum (27) begrenzen, der den Riemenraum (23) im Bereich der Dichtung (35) mindestens teilweise umgibt.

2. Arbeitsgerät nach Anspruch 1,
**dadurch gekennzeichnet, dass** der Außenraum (27) mindestens eine Öffnung (59, 60, 61, 62) zur Umgebung besitzt, und dass die Öffnung (59, 60, 61, 62) von einem durch die Öffnung (59, 60, 61, 62) in den Außenraum (27) ragenden Bauteil mindestens teilweise verschlossen ist.

3. Arbeitsgerät nach Anspruch 1 oder 2,
**dadurch gekennzeichnet, dass** das Auslegerbauteil (15) einen Rand (40) besitzt, der über mindestens einen Teil seiner Länge an einem Rand (41) des Deckels (16) anliegt und wobei der Außenraum (27) zwischen dem Riemenraum (23) und den Rändern (40, 41) von Auslegerbauteil (15) und Deckel (16) angeordnet ist.

4. Arbeitsgerät nach einem der Ansprüche 1 bis 3,
**dadurch gekennzeichnet, dass** der Deckel (16) über mindestens ein Befestigungselement an dem Auslegerbauteil (15) festgelegt ist, und dass sich das Befestigungselement durch den Außenraum (27) erstreckt.

5. Arbeitsgerät nach einem der Ansprüche 1 bis 4,
**dadurch gekennzeichnet, dass** das Arbeitsgerät eine Wasserleitung (9) zur Zufuhr von Wasser zu dem Werkzeug aufweist und dass mindestens ein Abschnitt der Wasserleitung (9) durch den Außenraum (27) geführt ist.

6. Arbeitsgerät nach einem der Ansprüche 1 bis 5,
**dadurch gekennzeichnet, dass** das Arbeitsgerät eine Schutzhaube (6) für das Werkzeug besitzt, die das Werkzeug teilweise abdeckt, und dass die Schutzhaube (6) einteilig mit dem Auslegerbauteil (15) ausgebildet ist.

7. Arbeitsgerät nach einem der Ansprüche 1 bis 6,
**dadurch gekennzeichnet, dass** das Arbeitsgerät einen Griffbügel (4) besitzt und dass mindestens ein Ende (57, 58) des Griffbügels (4) an dem Auslegerbauteil (15) festgelegt ist.

8. Arbeitsgerät nach einem der Ansprüche 1 bis 7,
**dadurch gekennzeichnet, dass** das Arbeitsgerät eine Arretiervorrichtung (10) für das Werkzeug besitzt, und dass die Arretiervorrichtung (10) einen durch eine Wand des Riemenraums (23) ragenden Arretierbolzen (51) besitzt, der längsverschieblich gelagert und gegenüber der Wand des Riemenraums (23) abgedichtet ist.

9. Arbeitsgerät nach einem der Ansprüche 1 bis 8,
**dadurch gekennzeichnet, dass** der Antriebsmotor (19) am Auslegerbauteil (15) fixiert ist.

10. Arbeitsgerät nach Anspruch 9,
**dadurch gekennzeichnet, dass** mindestens ein Befestigungselement, mit dem der Antriebsmotor (19) am Auslegerbauteil (15) fixiert ist, in den Riemenraum (23) ragt.

11. Arbeitsgerät nach einem der Ansprüche 1 bis 10,
**dadurch gekennzeichnet, dass** der Antriebsriemen (22) über eine drehfest mit einer Antriebswelle (37) verbundene Antriebsscheibe (24) und eine drehfest mit einer Abtriebswelle (26) verbundene Abtriebsscheibe (25) geführt ist, dass die Antriebswelle (37) und die Abtriebswelle (26) durch eine Wand des Riemenraums (23) ragen und dass der Riemenraum (23) an der Antriebswelle (37) über mindestens ein Lager (38) der Antriebswelle (37) und an der Abtriebswelle (26) über mindestens ein Lager (39) der Abtriebswelle (26) abgedichtet ist.

## Claims

1. Hand-guided working implement, comprising a tool mounted on a side arm (5) and a drive motor (19), wherein the tool is driven to rotate by the drive motor (19) via at least one drive belt (22) and wherein the drive belt (22) is located in a belt chamber (23) formed in the side arm (5), wherein the side arm (5) is represented by a side arm component (15) and a cover (16), the side arm component (15) and the cover (16) bounding the belt chamber (23),
**characterised in that** the belt chamber (23) is closed and sealed against the environment, **in that** the drive belt (22) is an elastic belt, **in that** a continuous receptacle (36) in which a seal (35) is located is formed between the side arm component (15) and the cover (16), and **in that** the side arm component (15) and the cover (16) bound an outer chamber (27), which is located outside the belt chamber (23) and at least partially surrounds the belt chamber (23) in the region of the seal (35).

2. Working implement according to claim 1,
**characterised in that** the outer chamber (27) has at least one opening (59, 60, 61, 62) towards the environment, and **in that** the opening (59, 60, 61, 62) is at least partially closed by a component projecting through the opening (59, 60, 61, 62) into the outer chamber (27).

3. Working implement according to claim 1 or 2,
**characterised in that** the side arm component (15) has an edge (40), which contacts an edge (41) of the cover (16) along at least a part of its length, the outer chamber (27) being located between the belt chamber (23) and the edges (40, 41) of the side arm component (15) and the cover (16).

4. Working implement according to any of claims 1 to 3,
**characterised in that** the cover (10) is secured to the side arm component (15) by at least one fastener, and **in that** the fastener extends through the outer chamber (27).

5. Working implement according to any of claims 1 to 4,
**characterised in that** the working implement has a conduit (9) for the supply of water to the tool, and **in that** at least a section of the conduit (9) is routed through the outer chamber (27).

6. Working implement according to any of claims 1 to 5,
**characterised in that** the working implement has a protective hood (6) for the tool, which partially covers the tool, and **in that** the protective hood (6) is formed integrally with the side arm component (15).

7. Working implement according to any of claims 1 to 6,
**characterised in that** the working implement has a handle bracket (4), and **in that** at least one end (57, 58) of the handle bracket (4) is secured to the side arm component (15).

8. Working implement according to any of claims 1 to 7,
**characterised in that** the working implement has a locking device (10) for the tool, and **in that** the locking device (10) has a locking pin (51), which extends through a wall of the belt chamber (23), is longitudinally displaceable and sealed against the wall of the belt chamber (23).

9. Working implement according to any of claims 1 to 8,
**characterised in that** the drive motor (19) is secured to the side arm component (15).

10. Working implement according to claim 9,
**characterised in that** at least one fastener by means of which the drive motor (19) is secured to the side arm component (15) projects into the belt chamber (23).

11. Working implement according to any of claims 1 to 10,
**characterised in that** the drive belt (22) is routed over a drive pulley (24) non-rotatably connected to a drive shaft (37) and over a driven pulley (25) non-rotatably connected to an output shaft (26), **in that** the drive shaft (37) and the output shaft (26) extend through a wall of the belt chamber (23), and **in that** the belt chamber (23) is sealed at the drive shaft (37) via at least one bearing (38) of the drive shaft (37) and at the output shaft (26) via at least one bearing (39) of the output shaft (26).

## Revendications

1. Dispositif de travail tenu à la main, avec un outil qui est monté sur un bras en porte-à-faux (5), et avec un moteur d'entraînement (19), l'outil étant entraîné en rotation par le moteur d'entraînement (19) par l'intermédiaire d'au moins une courroie d'entraînement (22), et la courroie d'entraînement (22) étant disposée dans un espace de courroie (23) formé dans le bras (5), le bras (5) étant formé par un composant de bras (15) et un couvercle (16), le composant de bras (15) et le couvercle (16) délimitant l'espace de courroie (23),
**caractérisé en ce que** l'espace de courroie (23) est fermé et étanche par rapport à l'environnement, **en ce que** la courroie d'entraînement (22) est conçue comme une courroie élastique, **en ce qu'**il est prévu, formé entre le composant de bras (15) et le couvercle (16), un logement périphérique (36) dans lequel est disposé un joint d'étanchéité (35), et **en ce que** le composant de bras (15) et le couvercle (16) délimitent un espace extérieur (27) qui est disposé à l'extérieur de l'espace de courroie (23) et qui entoure au moins en partie ledit espace de courroie (23) dans la zone du joint d'étanchéité (35).

2. Dispositif de travail selon la revendication 1,
**caractérisé en ce que** l'espace extérieur (27) présente une ouverture (59, 60, 61, 62) vers l'environnement, et **en ce que** ladite ouverture (59, 60, 61, 62) est fermée au moins en partie par un composant qui dépasse dans l'espace extérieur (27) par l'ouverture (59, 60, 61, 62).

3. Dispositif de travail selon la revendication 1 ou 2,
**caractérisé en ce que** le composant de bras (15) présente un bord (40) qui est appliqué sur une partie au moins de sa longueur contre un bord (41) du couvercle (16), et l'espace extérieur (27) étant disposé entre l'espace de courroie (23) et les bords (40, 41) du composant de bras (15) et du couvercle (16).

4. Dispositif de travail selon l'une des revendications 1 à 3,
**caractérisé en ce que** le couvercle (16) est fixé par au moins un élément de fixation au composant de bras (15), et **en ce que** ledit élément de fixation traverse l'espace extérieur (27).

5. Dispositif de travail selon l'une des revendications 1 à 4,
**caractérisé en ce qu'**il comporte un conduit d'eau (9) pour amener de l'eau jusqu'à l'outil, et **en ce qu'**au moins une section du conduit d'eau (9) traverse l'espace extérieur (27).

6. Dispositif de travail selon l'une des revendications 1 à 5,
**caractérisé en ce qu'**il comporte une protection (6) pour l'outil, qui couvre en partie ledit outil, et **en ce que** la protection (6) est formée d'une seule pièce avec le composant de bras (15).

7. Dispositif de travail selon l'une des revendications 1 à 6,
**caractérisé en ce qu'**il comporte une poignée en U (4) et **en ce qu'**au moins une extrémité (57, 58) de la poignée en U (4) est fixée au composant de bras (15).

8. Dispositif de travail selon l'une des revendications 1 à 7,
**caractérisé en ce qu'**il comporte un dispositif d'arrêt (10) pour l'outil, et **en ce que** le dispositif d'arrêt (10) comporte une tige d'arrêt (51) qui traverse une paroi de l'espace de courroie (23), qui est montée mobile longitudinalement et qui est étanche par rapport à ladite paroi de l'espace de courroie (23).

9. Dispositif de travail selon l'une des revendications 1 à 8,
**caractérisé en ce que** le moteur d'entraînement (19) est fixé au composant de bras (15).

10. Dispositif de travail selon la revendication 9,
**caractérisé en ce qu'**au moins un élément de fixation à l'aide duquel le moteur d'entraînement (19) est fixé au composant de bras (15) dépasse dans l'espace de courroie (23).

11. Dispositif de travail selon l'une des revendications 1 à 10,
**caractérisé en ce que** la courroie d'entraînement (22) passe sur une poulie motrice (24) reliée fixe en rotation à un arbre moteur (37), et sur une poulie réceptrice (25) qui est reliée fixe en rotation à un arbre récepteur (26), **en ce que** l'arbre moteur (37) et l'arbre récepteur (26) traversent une paroi de l'espace de courroie (23), et **en ce que** l'espace de courroie (23) est étanche sur l'arbre moteur (37) par l'intermédiaire d'au moins un palier (38) dudit arbre moteur (37), et sur l'arbre récepteur (26) par l'intermédiaire d'au moins un palier (39) dudit arbre récepteur (26).
